**Europäisches Patentamt**

**European Patent Office**

**Office européen des brevets**

(11) Veröffentlichungsnummer: **0 175 992**
**B1**

(12) # EUROPÄISCHE PATENTSCHRIFT

(45) Veröffentlichungstag der Patentschrift:
**11.05.88**

(21) Anmeldenummer: **85111381.1**

(22) Anmeldetag: **09.09.85**

(51) Int. Cl.⁴: **H 02 K 5/14,** H 01 R 39/40,
H 02 K 11/00, H 02 K 23/66

(54) **Verfahren zur Herstellung einer Bürstenhalterung einer Kommutatormaschine.**

(30) Priorität: **19.09.84 DE 3434407**

(43) Veröffentlichungstag der Anmeldung:
**02.04.86 Patentblatt 86/14**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**DE - A - 2 064 220**
**DE - A - 2 709 520**
**DE - C - 340 915**
**FR - A - 648 055**
**FR - A - 2 108 399**
**FR - A - 2 154 199**
**FR - A - 2 312 134**
**FR - A - 2 344 151**
**GB - A - 2 079 540**
**US - A - 3 187 214**
**US - A - 3 838 300**
**US - A - 4 385 276**

(73) Patentinhaber: **Siemens Aktiengesellschaft Berlin und München, Wittelsbacherplatz 2, D-8000 München 2 (DE)**

(72) Erfinder: **Wustmann, Oswald, Mühlweg 28, D-8708 Gerbrunn (DE)**
Erfinder: **Rohloff, Rolf, Flürleinstrasse 16, D-8700 Würzburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Verfahren zur Herstellung einer Bürstenhalterung für eine Kommutatormaschine gemäss Oberbegriff des Anspruchs 1; ein derartiges Verfahren ist aus der DE-A-2 709 520 bekannt.

Bei dem durch die DE-A-2 709 520 bekannten Verfahren werden beide Bürstenkästen von einer einzigen Metallplatte aufgenommen, die mittig zwischen den einander gegenüberliegenden Bürstenkästen eine Bohrung aufweist, durch welche die Maschinenwelle bzw. der Kommutator in radialem Abstand durch- bzw. eingesteckt wird. Auf die obere und untere Breitseite dieser Metallplatte wird vor dem Austrennen der Trennstege je eine isolierende Kunststoff-Abdeckplatte aufgelegt, die Löcher aufweist, durch welche die Trennstege von aussen durchtrennt werden können. An mehreren über die einzige Metallplatte verteilt angeordneten Anschlussstellen sind weitere elektrische Bauteile aufsteckbar bzw. anlötbar.

Für einen Elektromotor mit einer elektronischen Schaltung zum belastungsunabhängigen Regulieren der Drehzahl ist es weiterhin bekannt (CH-A-568 679), zur Erfassung der jeweiligen Drehzahl als Signalgeber an dem einen Wellenende des Motors einen wenigstens zwei Magnetpole aufweisenden Dauermagneten zu befestigen und an der dem Wellenende gegenüberliegenden Seite auf einer dort am Motorstator gehaltenen Leiterplatte eine Spule mit wenigstens zwei die Dauermagnete axial übergreifenden und die Spule durchsetzenden Polschuhen vorzusehen.

Gemäss Aufgabe vorliegender Erfindung soll eine kompakte und mit geringem Aufwand fertigbare Bürstenhalterung geschaffen werden, die auf einfache Weise elektrisch anschliessbar und mit weiteren elektrischen Bauteilen bestückbar ist.

Die Lösung dieser Aufgabe gelingt bei einem Verfahren zur Herstellung einer Bürstenhalterung für eine Kommutatormaschine der eingangs genannten Art durch die Lehre des Anspruchs 1; vorteilhafte Ausgestaltungen dieser Erfindung sind jeweils Gegenstand der Unteransprüche.

Die erfindungsgemässe Halterung für die Bürsten einer Kommutatormaschine erlaubt auf engstem Raum und mit nur wenigen fertigungs- und einfachen montagetechnischen Schritten die Positionierung und Kontaktierung der massgeblichen Bürstensystem-Funktionselemente, wobei sich der Kunststoff-Rahmen auf einfache Weise zur Halterung weiterer Funktionselemente, z.B. für ein Abtastelement der Rotordrehzahl mitverwenden lässt, wenn nach einer Ausgestaltung der Erfindung ein von einem Magnetring drehzahlabhängig berührungslos beeinflussbares Abtastelement, z.B. in Form eines Hall-Wandlers, in geringem radialen Abstand zu dem Magnetring in einer Tasche des Kunststoff-Rahmens gehaltert ist; die Tasche ist zweckmässigerweise zwischen den beiden Verbindungsarmen in einem Rahmenteil des Kunststoff-Rahmen angeordnet, der gleichzeitig weitere Steckanschlüsse aufnimmt, an denen äussere Anschlussleitungen zur Verbindung des Abtastelementes mit einer Drehzahlregelschaltung möglich sind, die ihrerseits dann wiederum mit den Steckanschlüssen der Bürsten verbunden ist.

Die Hilfsstege können auf besonders einfache Weise nach dem Erhärten der Kunststoff-Spritzmasse dadurch entfernt werden, dass die austrennbaren Hilfsstege ausserhalb des Kunststoff-Rahmens angeordnet sind. Nach einer weiteren Ausgestaltung der Erfindung sind in vorteilhafter Weise an den Kunststoff-Rahmen axial verlaufende Befestigungszapfen zur Befestigung des Kunststoff-Rahmens an der Innenseite eines Lagerschildes der Kommutatormaschine bzw. axiale Halterungszapfen zum axialen Aufstecken einer jeweiligen Bürstenandruckfeder für die Bürsten mitangespritzt.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen:

Fig. 1 eine perspektivische Innenansicht eines Lagerschildes der Kommutatormaschine mit daran befestigter erfindungsgemäss ausgeführter Bürstenhalterung,

Fig. 2 in einem axialen Teil-Längsschnitt das kommutatorseitige Ende der Kommutatormaschine mit eingebauter erfindungsgemässer Bürstenhalterung,

Fig. 3 eine stirnseitige Ansicht zweier durch austrennbare Hilfsstege verbundener gestanzter einstückiger Metall-Bauteileinheiten vor dem Einspritzen in den Kunststoff-Rahmen,

Fig. 4 eine Draufsicht auf die Anordnung gemäss Fig. 3,

Fig. 5 die Konstruktion gemäss Fig. 3 nach dem Eingiessen bzw. Umgiessen des Kunststoff-Rahmens,

Fig. 6 eine Draufsicht auf die Anordnung gemäss Fig. 5,

Fig. 7 die Anordnung gemäss Fig. 5 in Rückansicht und mit zusätzlich eingesetztem Abtastelement für eine Drehzahlregelung,

Fig. 8 die betriebsfertige Anordnung gemäss Fig. 5 nach Austrennung der Hilfsstege und dem Einsatz der Kohlebürsten,

Fig. 9 bis 11 einen vergrösserten Detailausschnitt des Kunststoff-Rahmens im Bereich der Taschenaufnahme für das Abtastelement und dessen elektrische Kontaktierung.

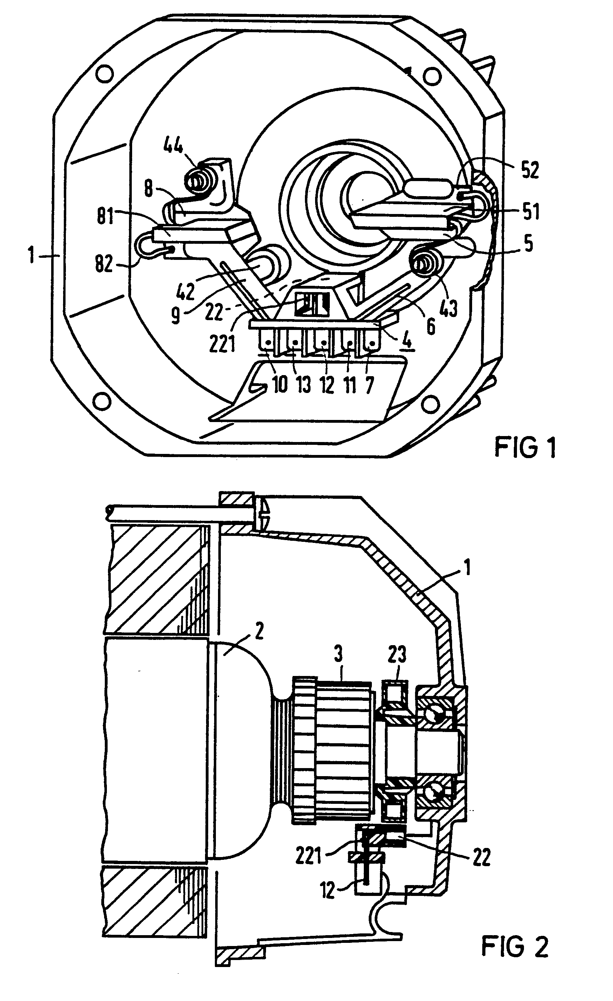

Fig. 1 zeigt die perspektivische Draufsicht auf die Innenseite des kommutatorseitigen Lagerschildes 1 eines in Fig. 2 in einem axialen Teil-Längsschnittbild dargestellten Kommutatormotors. Der Läufer des in Fig. 2 dargestellten Kommutatormotors trägt an seinem rechten Wellenende vor dem Wickelkopf 2 und dem Kommutator 3 einen in Kunststoff eingespritzten Magnetring 23. Der axiale Bereich des Kommutators 3 und des Magnetrings 23 wird gemäss Fig. 1 teilkreisförmig von einer Bürstenhalterung in Form eines Kunststoff-Rahmens 4 mit darin ein- bzw. angespritzten verschiedenen Funktionselementen berührungslos teilweise umgriffen.

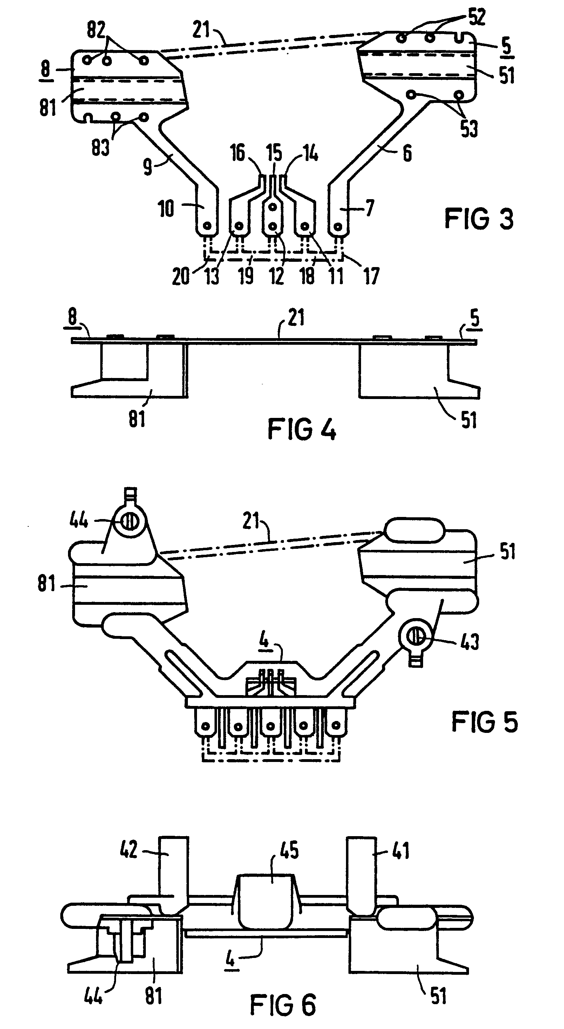

Fig. 3 und Fig. 4 zeigen ein einstückig gestanztes Metallteil; dieses Metallteil besteht aus zwei Metall-Bauteileinheiten, von denen jede einen Bürstenkasten-Grundkörpers 5 bzw. 8 eines Kastenbürstenhalters, einen Steckanschluss 7 bzw. 10 für den Anschluss einer äusseren Anschlussleitung sowie einen den Steckanschluss 7 bzw. 10 mit dem Grundkörper 5 bzw. 8 mechanisch und elektrisch verbindenden Verbindungsarm 6 bzw. 9 enthält. Die beiden Metall-Bauteileinheiten 5, 6, 7 bzw. 8, 9, 10 sind über diese gegenseitig positionierende, austrennbare Hilfsstege 21 miteinander verbunden, derart dass die beiden betriebsmässig nicht direkt elektrisch kontaktierten Bauteileinheiten bereits in ihrer betriebsmässigen Zuordnung zusammenhängend einstückig ausgestanzt, jedoch nach dem anschliessenden Einspritzen in den u.a. aus Fig. 5 ersichtlichen Kunststoff-Rahmen 4 durch Abtrennen der Hilfsstege 21 wieder elektrisch getrennt sind.

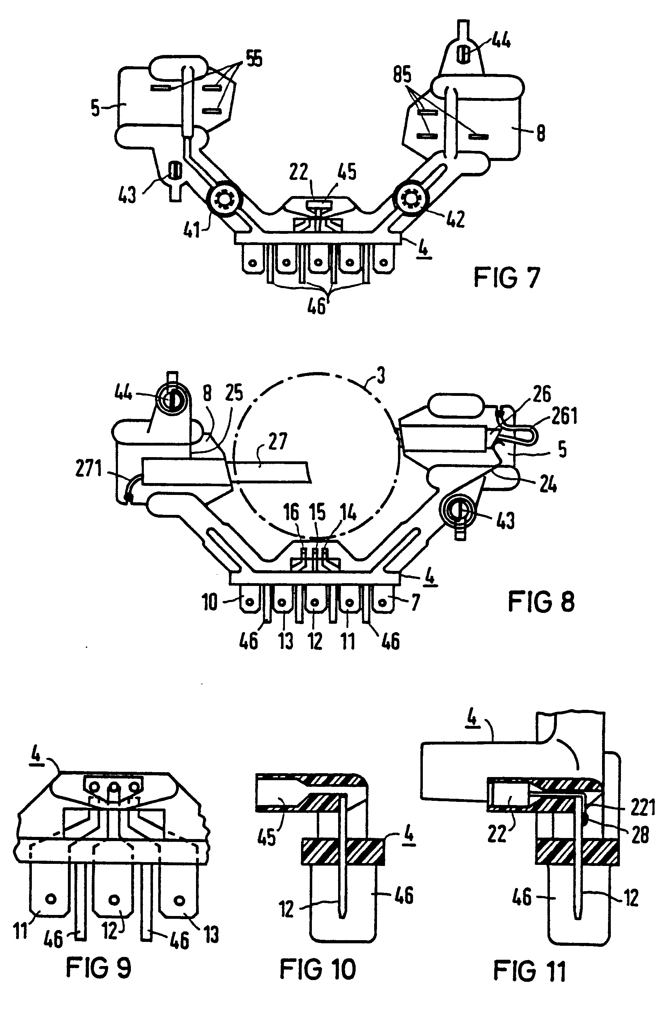

In gleicher Reihe wie die Steckanschlüsse 7, 10 sind weitere Steckanschlüsse 11, 12, 13 im Sinne einer von einem Zentralstecker kontaktierbaren Steckereinheit mitausgestanzt und durch später nach der Kunststoffeinbettung austrennbare Hilfsstege 21 in ihrer betriebsmässigen Zuordnung gegeneinander vorpositioniert. An den oberen Enden der weiteren Steckanschlüsse 11, 12, 13 sind Anschlussstege 14, 15, 16 für ein weiters, von dem Kunststoff-Rahmen 4 gehaltertes Bauteil vorgesehen, für das beim vorliegenden Ausführungsbeispiel durch ein Abtastelement in Form eines in Fig. 7 bzw. Fig. 11 eingezeichneten Hall-Wandlers 22 vorgesehen ist, in dem bei Drehung des Rotors des Kommutatormotors durch den Magnetring 23 berührungslos drehzahlproportionale Signale erzeugt werden, die über an die weiteren Steckanschlüsse 11, 12, 13 angeschlossene Leitungen an eine hier nicht dargestellte Drehzahlregelschaltung und von dieser dann an die Steckanschlüsse 7, 10 der Bürstenhalterungen bzw. der Bürsten weitergegeben werden.

Fig. 5-7 zeigen die Anordnung gemäss Fig. 3 nach dem Ein- bzw. Umspritzen des Kunststoff-Rahmens 4. Zur zusätzlichen Verankerung angespritzter Kunststoffteile sind in den Grundkörper 5 bzw. 8, wie aus Fig. 3 ersichtlich, Verankerungslöcher 52, 53 bzw. 82, 83 eingestanzt. An den Kunststoff-Rahmen 4 sind weiterhin axiale Halterungszapfen 43, 44 zum axialen Aufstecken jeweils einer Bürstenandruckfeder angespritzt. In gleicher Weise sind mit nur in axialer Richtung zeihbaren Formteilen und in axialer Richtung handhabbarer Montage an den Kunststoff-Rahmen 4 axiale Befestigungszapen 41, 42 zur Befestigung des Kunststoff-Rahmens 4 an der Innenseite des Lagerschildes 1 des Kommutatormotors angespritzt. Wie insbesondere aus Fig. 6 ersichtlich, ist mittig zwischen den Verbindungsarm 6, 9 in einem auch die zu einer zentralen Steckereinheit zusammengefassten Steckanschlüsse aufnehmenden Rahmenteil eine axial geöffnete Tasche 45 angeordnet, in die der als Abtastelement vorgesehene Hall-Wandler 22 axial einschiebbar und mit den Anschlussstegen 14, 15, 16 kontaktierbar ist.

Fig. 8 zeigt die komplette betriebsfertige Halterung für die Bürsten einer Kommutatormaschine, nachdem die zunächst vorpositionierenden Hilfsstege 21 ausgetrennt sind. Zur Bürstenführung sind U-förmige Bürstenköcher 51, 81 mit vorstehenden kleinen Zungen in entsprechend eingestanzte, in Fig. 7 ersichtliche, Schlitze 55, 85 der Grundkörper 5, 8 eingesteckt und verstemmt. Die Stromleitungslitzen 261; 271 der Bürsten 26, 27 sind, wie aus Fig. 8 ersichtlich, direkt an den Grundkörpern 5, 8 kontaktiert, die ihrerseits über die Verbindungsarme 6, 9 einstückig mit den Steckanschlüssen 7, 10 elektrisch verbunden sind. Zum Andruck der Bürsten 26, 27 auf den nur angedeuteten Kommutator 1 dienen auf die axialen Halterungszapfen 43, 44 aufgesteckte Bürstenandruckfedern 24, 25.

Fig. 9 - Fig. 11 zeigen in Detail-Vergrösserungen des mittleren Rahmenteils des Kunststoff-Rahmens 4, um die mechanische Halterung und elektrische Kontaktierung des Hall-Wandlers 22 mit den weiteren Anschlusssteckern 11-13 näher zu erläutern. In die in Fig. 10 noch nicht bestückte axial geöffnete Tasche 45 des Kunststoff-Rahmens 4 wird gemäss Fig. 11 der Hall-Wandler 22 eingesteckt, wobei sein Anschlussdrahtende 221 axial durch eine Öffnung durchsteckbar und auf das obere frei zugängliche Anschlussende jeweils auf die Anschlussstege 14-16 der weiteren Steckanschlüsse 11-134 zubiegbar und mit diesen, z.B. in dem in Fig. 11 dargstellten Lötpunkt 28, elektrisch kontaktierbar ist. Um in vorteilhafter Weise einerseits die Steckanschlüsse 7, 10 bzw. 11-13 auf engstem Raum für eine zentrale Steckereinheit unterzubringen, andererseits jedoch auch hinreichende Isolations- bzw. Kriechstrecken zwischen den Steckanschlüssen gewährleisten zu können, sind im mittleren Rahmenteil, wie z.B. aus Fig. 7 ersichtlich, an den Kunststoff-Rahmen 4 entsprechende zwischen den einzelnen Steckanschlüssen verlaufende Isolationsstege 46 mitangespritzt.

### Patentansprüche

1. Verfahren zur Herstellung einer Bürstenhalterung für eine Kommutatormaschine mit einer gestanzten Metall-Bauteileinheit (5-10), die den Kommutator (3) bzw. die Maschinenwelle in radialem Abstand übergreifr und zumindest einen Bürstenkasten-Grundkörper (5, 8) einen Steckanschluss (7, 10) für eine äussere Anschlussleitung und einen Verbindungssteg (6, 9) zwischen dem Grundkörper und dem Steckanschluss sowie weitere betriebsmässig elektrisch gegeneinander zu isolierende Teile aufweist, wobei diese Teile zunächst zur gegenseitigen Positionierung über mitangestanzte Hilfsstege (21) untereinander verbunden sind, die nach Einbettung der Metall-Bauteileinheit in eine Kunststoff-Abdeckung ausgetrennt werden, dadurch gekennzeichnet, dass jeweils bei zumindest zwei Metall-Bauteileinheiten (5, 6, 7; 8, 9, 10) mit je einem Bürstenkasten-Grundkörper (5; 8) und einem Verbindungsarm (6; 9) zu dem als Teil eines Zentralsteckers (7, 10; 11-13) jeweils in Umformsrichtung zwischen den Bürstenkasten-Grundkörpern (5; 8) angeordneten und zungenförmig ausgestanzten Steckanschluss (7; 10) austrennbare Hilfsstege (21; 17-20) einerseits zwischen den Grundkörpern (5; 8) sowie andererseits zwischen den zungenförmigen Steckanschlüssen (7; 10) der Bürstenkasten-Grundkörper (5; 8) und weiteren zungenförmigen Zentralstecker-Steckanschlüssen (11-13) einstückig mitangestanzt und diese Hilfsstege (21; 17-20) nach dem Ein-

spritzen der beiden Bauteileinheiten (5, 6, 7; 8, 9, 10) in einen Kunststoff-Rahmen (4) ausgetrennt werden.

2. Verfahren nach Anspruch 1, dadurch gekennzeichnet, dass die austrennbaren Hilfsstege (21; 17-20) ausserhalb des Kunststoff-Rahmens (4) angeordnet werden.

3. Verfahren nach Anspruch 1 oder 2, dadurch gekennzeichnet, dass an die weiteren Steckanschlüsse (11-13) Anschlussstege (14-16) für weitere von dem Kunststoff-Rahmen (4) gehalterte und über die Anschlussstege (14-16) elektrisch kontaktierbare Bauteile angestanzt werden.

4. Verfahren nach einem der Ansprüche 1 bis 3, dadurch gekennzeichnet, dass ein von einem Rotordrehzahlgeber (Magnetring 23) drehzahlabhängig beeinflussbares Abtastelement (Hall-Wandler 22) in geringem radialen Abstand zu dem Rotordrehzahlgeber in einer Tasche (45) des Kunststoff-Rahmens (4) gehalten wird.

5. Verfahren nach Anspruch 4, dadurch gekennzeichnet, dass die freien Enden der Anschlussstege (14-16) und des Abtastelementes (22) in eine axial zugängliche Öffnung der Tasche (45) eingesteckt und dort kontaktiert werden.

6. Verfahren nach Anspruch 4 oder 5, dadurch gekennzeichnet, dass die Tasche (45) zwischen den beiden Verbindungsarmen (6 bzw. 9) in einem gleichzeitig den Zentralstecker aufnehmenden Rahmenteil des Kunststoff-Rahmens (4) angeordnet wird.

7. Verfahren nach einem der Ansprüche 1 bis 6, dadurch gekennzeichnet, dass an den Kunststoff-Rahmen (4) axiale Befestigungszapfen (41, 42) zur Befestigung des Kunststoff-Rahmens (4) an der Innenseite eines Lagerschildes (1) der Kommutatormaschine angespritzt werden.

8. Verfahren nach einem der Ansprüche 1 bis 7, dadurch gekennzeichnet, dass an den Kunststoff-Rahmen (4) axiale Halterungszapfen (43, 44) zum jeweiligen Aufstecken einer Bürstenandruckfeder (24, 25) angespritzt werden.

**Claims**

1. Method for manufacturing a brush holder for a commutating machine having a unit comprising a stamped metal component (5-10), which overlaps the commutator (3) or the machine shaft with radial clearance and which has at least one brush box base body (5, 8), a plug connection (7, 10) for an external connection lead and a connecting piece (6, 9) between the base body and the plug connection and further parts which in operation are to be insulated electrically from one another, these parts being initially connected to one another for reciprocal positioning via auxiliary cross-pieces (21) stamped out with them, said cross-pieces being removed after the metal component has been inserted into a plastic covering, characterised in that where there are at least two metal components (5, 6, 7; 8, 9, 10) each of which has one brush box base body (5; 8) and one connecting arm (6; 9) to respective plug connections (7; 10), which connections are arranged in peripheral direction, as part of a central plug (7, 10; 11-13), between the brush box base bodies (5; 8) and which

are stamped out in the shape of a tongue, there are respective removable auxiliary cross-pieces (21; 17-20) on the one hand between the base bodies (5; 8) and on the other hand between the tongue-shaped plug connections (7; 10) of the brush box base bodies (5; 8) and further tongue-shaped central plug plug-in connections (11-13) which may be stamped out together in one piece and these auxiliary cross pieces (21; 17-20) may be removed after the two components (5, 6, 7; 8, 9, 10) have been injected into a plastic framework (4).

2. Method according to claim 1, characterised in that the removable auxiliary cross-pieces (21; 17-20) are disposed outside the plastic framework (4).

3. Method according to claim 1 or 2, characterised in that stamped out with the further plug connections (11-13) are connecting pieces (14-16) for further components mounted on the plastic framework (4) and electrically contactable via the connecting pieces (14-16).

4. Method according to one of claims 1 to 3, characterised in that a scanning element (Hall transducer 22) which may be influenced, in dependence on the speed, by a rotor speed transmitter (magnetic ring 23) is mounted with small radial clearance from the rotor speed transmitter in a pocket (45) of the plastic framework (4).

5. Method according to claim 4, characterised in that the free ends of the connecting pieces (14-16) and of the scanning element (22) are inserted into an axially accessible opening of the pocket (45) and are contacted there.

6. Method according to claim 4 or 5, characterised in that the pocket (45) is disposed between the two connecting arms (6 or 9) in a housing section of the plastic framework (4) which also accomodates the central plug.

7. Method according to one of claims 1 to 6, characterised in that injection moulded onto the plastic framework (4) are axial fixing pins (41, 42) for the attachment of the plastic framework (4) to the inside of a bearing plate (1) of the commutating machine.

8. Method according to one of claims 1 to 7, characterised in that injection moulded onto the plastic framework (4) are axial mounting pins (43, 44) for the mounting of respective brush pressure springs (24, 25).

**Revendications**

1. Procédé pour fabriquer un porte-balais pour une machine à collecteur, comportant une unité modulaire métallique découpée (5-10), qui s'étend au-dessus du collecteur (3) ou de l'arbre de la machine, à une certaine distance radiale, et comporte au moins un corps de base (5, 8) du boîtier logeant les balais, une borne enfichable (7, 10) pour un conducteur extérieur de raccordement et une barrette de liaison (6, 9) située entre le corps de base et la borne enfichable, ainsi que d'autres éléments devant être isolés électriquement les uns par rapport aux autres en fonctionnement, ces éléments étant reliés entre eux tout d'abord pour leur positionnement mutuel, par l'intermédiaire de barrettes auxiliaires (21) formée conjointement par découpage et sectionnées après l'enrobage de l'unité modulaire métallique dans un revêtement en matière plastique, caractérisé par le fait que dans le cas d'au moins deux unités modulaires métalliques (5, 6, 7; 8, 9, 10) comportant chacune un corps de base (5; 8) du boîtier logeant les balais et un bras (6; 9) de liaison à la borne enfichable (7; 10) découpée en forme de languette et disposée respectivement dans la direction circonférentielle entre les corps de base (5; 8) des boîtiers logeant les balais, on découpe conjointement d'un seul tenant des barrettes auxiliaires séparables (21; 17-20) d'une part entre les corps de base (5; 8) ainsi que d'autre part entre les bornes enfichables en forme de languettes (7; 10) des corps de base (5; 8) des boîtiers logeant les balais et d'autres bornes enfichables en forme de languettes (11-13) d'un connecteur central, et on sectionne ces barrettes auxiliaires (21; 17-20) après l'insertion, par moulage par injection, des deux unités modulaires (5, 6, 7; 8, 9, 10) dans un cadre en matière plastique (4).

2. Procédé suivant la revendication 1, caractérisé par le fait qu'on dispose les barrettes auxiliaires séparables (21; 17-20) à l'extérieur du cadre en matière plastique (4).

3. Procédé suivant la revendication 1 ou 2, caractérisé par le fait qu'on découpe, dans les autres bornes enfichables (11-13), des barrettes de raccordement (14-16) pour d'autres modules pouvant être maintenus par le cadre en matière plastique (4) et avec lesquelles un contact électrique peut être établi par l'intermédiaire des barrettes de raccordement (14-16).

4. Procédé suivant l'une des revendications 1 à 3, caractérisé par le fait qu'un organe d'exploration (transducteur de Hall 22), qui peut être influencé en fonction de la vitesse de rotation par un capteur de la vitesse de rotation du rotor (bague magnétique 23), est maintenu à une faible distance radiale du capteur de la vitesse de rotation du rotor dans une cavité (45) du corps en matière plastique (4).

5. Procédé suivant la revendication 4, caractérisé par le fait que les extrémités libres des barrettes de raccordement (14-16) et de l'élément d'exploitation sont enfichées dans une ouverture accessible axialement de la cavité (45) et établissent un contact en cet endroit.

6. Procédé suivant la revendication 4 ou 5, caractérisé par le fait qu'on dispose la cavité (45) entre les deux bras de liaison (6, 9) dans une partie du cadre en matière plastique (4), recevant simultanément le connecteur central.

7. Procédé suivant l'une des revendications 1 à 6, caractérisé par le fait qu'on forme par moulage par injection, sur le cadre en matière plastique (4), des tétons de fixation axiaux (41, 42) servant à fixer le cadre en matière plastique (4) sur la face intérieure d'un flasque (1) de la machine à collecteur.

8. Procédé suivant l'une des revendications 1 à 7, caractérisé par le fait qu'on forme par moulage par injection, sur le cadre en matière plastique (4), des tétons de support axiaux (43, 44) permettant l'accrochage de ressorts respectifs (24, 25) de compression des balais.

FIG 1

FIG 2

FIG 3

FIG 4

FIG 5

FIG 6

FIG 7

FIG 8

FIG 9

FIG 10

FIG 11